# EUROPÄISCHE PATENTSCHRIFT

(11) **EP 0 863 699 B1**
(45) Veröffentlichungstag und Bekanntmachung des Hinweises auf die Patenterteilung: **08.03.2000**
(21) Anmeldenummer: 96939032.7
(22) Anmeldetag: 14.11.1996
(51) Int. Cl.: A01G 9/10

(54) **FORMKÖRPER AUS MIT POLYURETHAN/POLYHARNSTOFF VERFESTIGTEM HUMUSHALTIGEM PFLANZENSUBSTRAT, EIN VERFAHREN ZU DEREN HERSTELLUNG UND DEREN VERWENDUNG IN DER PFLANZENZUCHT**
MOULDED BODIES OF HUMUS-CONTAINING PLANT SUBSTRATE HARDENED WITH POLYURETHANE/POLYUREA, A PROCESS FOR THEIR PRODUCTION AND THEIR USE IN PLANT BREEDING
CORPS MOULES EN UN SUBSTRAT VEGETAL HUMIQUE DURCI AU POLYURETHANNE/POLYUREE, LEUR PROCEDE DE PRODUCTION ET LEUR UTILISATION EN CULTURE VEGETALE

(30) Priorität: 27.11.1995 DE 19544108
(43) Veröffentlichungstag der Anmeldung: 16.09.1998
(73) Patentinhaber: BAYER AG, 51368 Leverkusen (DE); ERNST SONDERHOFF GmbH & Co. KG, D-50829 Köln (DE)
(72) Erfinder: BOHNE, Franz-Josef, D-42799 Leichlingen (DE); BRAHM, Martin, D-51519 Odenthal (DE); GONZALEZ-DÖRNER, Alberto Carlos, I-36065 Mussolente (IT); HERRMANN, Marc, D-42799 Leichlingen (DE); SCHMIDT, Manfred, D-41540 Dormagen (DE); GIESEN, Franz-Josef, D-41569 Rommerskirchen (DE); TEICHMANN, Manfred, D-50935 Köln (DE)
(74) Vertreter: Pettrich, Klaus-Günter, Dr.
(86) Internationale Anmeldenummer: EP9604981
(87) Internationale Veröffentlichungsnummer: WO9719585

(56) Entgegenhaltungen:
- EP-A- 0 209 790
- EP-A- 0 377 923
- DE-A- 1 949 462
- DE-A- 3 829 256
- DE-U- 8 807 619
- US-A- 4 174 957

## Beschreibung

Die Erfindung betrifft Formkörper für die Anzucht und Aufzucht von Pflanzensämlingen, wobei der Formkörper aus mit Polyurethan/Polyharnstoff verfestigten, humushaltigen Pflanzensubstrat besteht. Weiterhin bezieht sich die Erfindung auf ein Verfahren zur Herstellung derartiger Formkörper sowie auf deren Verwendung als Nährmedien in der Pflanzenan- und -aufzucht.

Die Pflanzenanzucht (Aussaat und Stecklingsvermehrung) und Pflanzenaufzucht (Weiterzüchtung der zum Pflänzling entwickelten Pflanze) wird traditionsgemäß in Pflanzenerden betrieben, welche üblicherweise je nach Pflanzenart aus Gemischen von Torf, Sand, Gartenerden und Komposten, Moos-Rindenböden oder sogenannten Fertigerden, denen vielfach Kunststoffgranulate als Hilfsmittel zur Bodenlockerung zugesetzt sind, bestehen. In Großgärtnereien werden zur Pflanzenan- und -aufzucht Formkörper eingesetzt, welche aus mit Polyurethan-Kunststoffverfestigten Pflanzensubstraten bestehen. Diese Substratkörper enthalten den Pflanzensämling und können bei der Anzucht mit dem Pflänzchen ausgestochen oder geschnitten werden, oder die Sämlinge können direkt auf vorgestochenen Formkörpern gezüchtet werden. Es sind bereits aus der DE-OS 1 949 462 Formkörper aus Torf und Nährstoffen bekannt, welche mittels eines Polyurethans verfestigt worden sind. Aus der DE 3 829 256 sind Fertigungsanlagen bekannt, auf denen diskontinuierlich oder kontinuierlich ein Torf-Wassergemisch mit einem hydrophilen Polyurethan-Prepolymer versetzt wird und in einer Werkzeugform unter Aushärtung des Kunststoffes zu entsprechenden Formkörpern, sogenannten Torf-Plugs, ausgeformt wird. Die gegenwärtig eingesetzten Polyurethan-Polymere, wie sie zur Herstellung der in der Pflanzenzucht eingesetzten Formkörper verwendet werden, zeigen in diesem Anwendungsbereich noch einige Nachteile wie z.B.:
- Ungenügende Reaktivität im Torf-Wassergemisch,
- hohe Temperaturempfindlichkeit,
- hohe Abhängigkeit vom neutralen pH-Bereich,
- hohe Empfindlichkeit hinsichtlich Störungen der Reaktivität, verursacht durch die natürlichen Schwankungen der Substratzusammensetzung,
- hoher Verbrauch des Polymer-Kunststoffanteils,
- komplexer Anlagenbau.

Aufgabe der vorliegenden Erfindung war es daher, einen Polyurethan-Kunststoff aufzufinden, mit dem sich Pflanzensubstrat-haltige Formkörper zur Pflanzenan- und -aufzucht ohne die obengenannten Nachteile herstellen lassen.

Es wurde nun gefunden, daß sich Pflanzensubstrat-haltige, mit einem Polyurethan-Kunststoff verfestigte Formkörper ohne die erwähnten Nachteile herstellen lassen, wenn zur Verfestigung der Formkörper Prepolymere aus der Umsetzung von Toluylendiisocyanat (nachfolgend TDI genannt) mit mindestens ein Aminopolyetherpolyol enthaltenden Polyolkomponente eingesetzt werden.

Gegenstand der Erfindung sind somit Formkörper aus mit Polyurethan/-Polyharnstoff verfestigten humushaltigen Pflanzensubstrat, die man erhält, indem man
a) humushaltiges Pflanzensubstrat in Wasser aufschlämmt,
b) ein flüssiges NCO-Prepolymer mit einem NCO-Gehalt von max. 15 Gew.-%, hergestellt durch Umsetzung von TDI mit einer Polyetherpolyolkomponente, enthaltend mindestens ein Aminopolyetherpolyol in einer Menge von 0,5 bis 100 mol-%, bezogen auf die Polyetherpolyolkomponente, zumischt und
c) das so erhaltene Gemisch in eine Form einbringt und verfestigen läßt.

Die erfindungsgemäßen Formkörper können alle in der Pflanzenzucht üblichen humushaltigen Pflanzensubstrate wie Torf, Sand/Erdgemische, Blumenerde, Klärschlamm, Kompost, Rindengranulate, vorzugsweise Torf, Blumenerde, Klärschlamm und/oder Kompost enthalten.

Vorzugsweise enthalten die erfindungsgemäßen Formkörper das NCO-Prepolymer in einer Menge von 5 bis 20 Gew.-%, bezogen auf das humushaltige Pflanzensubstrat.

Die Polyetherpolyolkomponente sollte bevorzugt eine mittlere Funktionalität von 2 bis 6 und ein durchschnittliches Molekulargewicht im Bereich von 250 bis 12 000, insbesondere von 350 bis 6000 aufweisen.

Die Polyetherpolyolkomponente enthält immer mindestens einen Aminogruppen-enthaltenden Polyether. Hierunter versteht man einen Polyether, der auf einem Aminoalkohol oder auf einem Polyamin gestartet ist (z.B. auf Triethanolamin, Ethylendiamin).

Beispielsweise können propylenoxylierte oder ethylenoxylierte auf Triethanolamin oder Ethylendiamin gestartete Aminopolyether enthalten sein.

Es können natürlich auch mehrere Aminopolyetherpolyole in der Polyolkomponente nebeneinander anwesend sein. Auf die Polyetherpolyolkomponente bezogen beträgt der Anteil an Aminopolyetherpolyol zweckmäßigerweise 0,5 bis 100 mol-%, vorzugsweise 2 bis 20 mol-%.

Neben mindestens dem einen Aminopolyetherpolyol können auch noch andere Polyetherpolyole in der Polyolkomponente anwesend sein. Beispiele hierfür sind z.B. Polyether mit Molekulargewichten von 250 bis 12000 und Funktionalitäten von 2 bis 6, insbesondere Polyester mit Molekulargewichten von 350 bis 1000.

In der Polyolkomponente können auch noch übliche Hilfs- und Zusatzmittel wie z.B. Aktivatoren, Emulgatoren und/oder Stabilisatoren enthalten sein.

Als Isocyanatkomponente wird TDI, z.B. das 2,4- und 2,6-TDI sowie beliebige Gemische dieser Isomeren eingesetzt. Auch modifiziertes TDI, z.B. durch Carbodiimidgruppen, Urethangruppen, Alphanatgruppen, Isocyanuratgruppen, Harnstoffgruppen oder Biuretgruppen-modifiziertes TDI kann eingesetzt werden.

Vorzugsweise setzt man das TDI im Gemisch der 2,4- und 2,6-Isomeren im Verhältnis 80:20 (T80) ein.

Der NCO-Gehalt des durch die Umsetzung von TDI mit der Polyolkomponente erhaltenen Prepolymers liegt max. bei 15 Gew.-%, z.B. bei 5 bis 15 Gew.-%, vorzugsweise bei 3 bis 10 Gew.-%, bezogen auf die Menge von eingesetztem TDI und Polyol.

Neben dem humushaltigen Pflanzensubstrat können die erfindungsgemäßen Formkörper je nach Pflanzenart und Wachstumsperiode auch noch Zusatzstoffe wie z.B. Nährsubstanzen, Wachstumsregulatoren, Puffersubstanzen, Schädlingsbekämpfungs- und Abwehrmittel, Mineralsalze und Spurenelemente sowie alle Düngemittel, die für das Wachstum der Pflanzen erforderlich sind enthalten. Auch an sich bekannten Mittel zur Vorverlegung der Aufzuchtzeit und Kürzung der Wachstumsdauer können in den erfindungsgemäßen Formkörpern enthalten sein.

Ein weiterer Gegenstand der Erfindung ist ein Verfahren zur Herstellung von Formkörpern aus mit Polyurethan/Polyharnstoff-verfestigten humushaltigen Pflanzensubstrat, bei dem man
a) humushaltiges Pflanzensubstrat in Wasser aufschlämmt,
b) ein flüssiges NCO-Prepolymer mit einem NCO-Gehalt von max. 15 Gew.-%, hergestellt durch Umsetzung von TDI mit einer Polyetherpolyolkomponente, enthaltend mindestens ein Aminopolyetherpolyol in einer Menge von 0,5 bis 100 mol-%, bezogen auf die Polyetherpolyolkomponente, zumischt und
c) das so erhaltene Gemisch in eine Form einbringt und verfestigen läßt.

Neben dem humushaltigen Pflanzensubstrat können gegebenenfalls auch noch ein oder mehrere Zusatzstoffe wie z.B. Nährsubstanzen, Wachstumsregulatoren, Puffersubstanzen, Schädlingsbekämpfungsmittel, Abwehrmittel, Mineralsalze und Spurenelemente sowie alle Düngemittel, die für das Wachstum der Pflanzen erforderlich sind, in fester oder flüssiger Form in das Gemisch eingebracht werden.

Das erfindungsgemäße Verfahren kann auf allen bisher bekannten kontinuierlich betriebenen Fertigungsanlagen zur Herstellung von Formkörpern zur Pflanzenzucht (Torf-Plugs) durchgeführt werden. In vorteilhafter Weise können die bisherigen Fertigungsanlagen jedoch vereinfacht und räumlich verkürzt werden, so daß dementsprechende zur Durchführung des erfindungsgemäßen Verfahrens Fertigungsanlagen wesentlich kostengünstiger betrieben werden können. Die Vereinfachung bei Durchführung des erfindungsgemäßen Verfahrens besteht im Wegfall von Maßnahmen wie begrenzten Einsatz des humushaltigen Substrates, von Temperatur- und pH-Überwachung sowie der Verkürzung von Laufbändern aufgrund der rascheren Verfestigung des erfindungsgemäß eingesetzten NCO-Prepolymers im Vergleich zu bisher eingesetzten PUR-Polymeren. Neben einer Kostensenkung bei Herstellung der Formkörper kann somit in vorteilhafter Weise auch eine höhere Produktivität erreicht werden.

Das kontinuierliche Verfahren zur Verfestigung humushaltiger Pflanzensubstrate, insbesondere zur Torfverfestigung wird dabei zweckmäßigerweise wie folgt durchgeführt: Auf einer an sich bekannten Fertigungsanlage zur Herstellung von Torf-Plugs wird aus einen Vorratsbehälter das aufgeschlämmte Wasser-Torf-Gemisch in eine Misch- und Dosiervorrichtung gegeben, in der dem Gemisch 5 bis 20 Gew.-% des Polyurethan-Prepolymers zugegeben und homogenisiert wird. Der erhaltene Torf-Wasser-Kunststoffbrei wird zu einem bandförmigen Formkörper geformt (z.B. 120 cm Breite, 10 cm Höhe). Während dieser Ausformung zu einem bandförmigen Formkörper setzt bereits die Aushärtung des zugegebenen Prepolymers ein, so daß in einem weiteren Verfahrensschritt von unten formbeständige Löcher eingepreßt werden können, die zur späteren Aufnahme des Pflanzenstecklings in der Gärtnerei dienen. Von oben wird in an sich bekannter Weise das Einpressen von Formgebungskörpern zur Begrenzung der Torfeinzelteile (Torf-Plugs) durchgeführt. Anschließend läuft das Material über ein Förderband, wobei die entgültige Auspolymerisation des Polyurethan-Polyharnstoffes die Wasserausscheidung begünstigt. In einer Zentrifuge wird der wasserhaltige Formkörper auf den gewünschten Wassergehalt eingestellt. Die Formkörper werden anschließend auf die gewünschte Form zugeschnitten und für den Transport in Großgärtnereien verpackt.

Neben dem an sich bekannten Verfahren zur kontinuierlichen Herstellung von Torf-Plugs können die erfindungsgemäßen Formkörper auch in einer diskontinuierlichen Weise hergestellt werden. In den erfindungsgemäßen Formkörper eingesetzten Pflanzensämlingen können mitsamt des Formkörpers ins Erdreich gepflanzt werden, wobei die Wurzeln des Sämlings ungehindert durch den Formkörper in das umgebende Erdreich hineinwachsen können, so daß Pflanzen beliebiger Größe, auch Bäume, mit Hilfe der erfindungsgemäßen Formkörper ausgepflanzt werden können. In bezug auf die Anforderungen an die Wachstumsbedürfnisse der Pflanzen zeigen die erfindungsgemäßen Formkörper folgende wesentliche Vorteile:
- Gute Luftdurchlässigkeit für eine optimierte Belüftung der Substrate.
- Gute, wohl abgewogene Wasserespeicherfähigkeit für eine dauerhafte Wasserversorgung der Pflanze.
- Gute Durchspülbarkeit für das Ausfluten überflüssiger Wassermengen und zeitweise Durchspülung gegen vorzeitige Versalzung der Substrate bei Düngemittelzugabe.
- Gute Diffusionsfähigkeit und Wassersaugfähigkeit, um besonders bei Hygrokulturen den Wassertransport aus dem Grundwasser der Hygrokultur in den belüfteten Wurzelraum zur gleichmäßigen und ständigen Wasserversorgung sicherzustellen.
- Günstiger Wärmehaushalt der Substrate für optimales Wachstum und gegen Schädigungen (besonders bei Freilandkulturen) bei kurzfristigem Frosteinbruch oder gegen zu starke Bodenerwärmung.

Ein weiterer Gegenstand der Erfindung ist die Verwendung der vorstehend beschriebenen Formkörper als Wachstumsmedien für Setzlinge in der Pflanzenan- und -aufzucht. Neben der Zierpflanzenzucht können die erfindungsgemäßen Formkörper auch in der Baumpflanzenzucht, Baumschulung, Weinrebenanzucht, im Forstgewerbe zur Koniferenanzucht, zur Dünen- und Hangbefestigung sowie zur Wiederaufforstung verkarsteter Gebiete eingesetzt werden. Auch bei der Balkonbepflanzung sowie für Zimmerpflanzen können die erfindungsgemäßen Formkörper vorteilhaft eingesetzt werden.

Die nachfolgenden Beispiele sollen die Erfindung näher erläutern, ohne sie jedoch in ihrem Umfang zu begrenzen.

### Beispiele

### Beispiel 1

### Herstellung eines NCO-Prepolymers

348,32 kg Toluylendiisocyanat (Gemisch aus 80 Gew.-% 2,4- und 20 Gew.-% 2,6-Isomeren) wurden mit 608,90 kg eines Polyethergemisches bestehend aus einer Mischung aus 12 mol eines linearen Polyethers mit einer OH-Zahl von 185 (MG: 606) und 1 mol eines trifunktionellen auf Triethanolamin gestarteten Polyethers mit einer OH-Zahl von 150 (MG: 1122) versetzt und 2 Stunden bei 60°C gerührt.

Man erhielt so ein Prepolymer mit folgenden analytischen Daten:
NCO-Gehalt: 8,06 Gew.-%
Viskosität (25°C): 22100 mPas

### Beispiel 2

### Herstellung eines erfindungsgemäßen Formkörpers

Die erfindungsgemäßen Formkörper wurden auf einer an sich bekannten Fertigungsanlage zur kontinuierlichen Herstellung sogenannter Torf-Plugs hergestellt. Eine derartige Fertigungsanlage ist z.B. in der DE 3 829 256 beschrieben.

Aus einem Vorratsbehälter gelangte das Wasser/Torf Gemisch in eine Misch- und Dosieranlage, in der dem Gemisch 5 Gew.-% des NCO-Prepolymers aus Beispiel 1 zugegeben und homogenisiert wurde. Der Torf/Wasser Kunststoffbrei erfuhr beim Durchgang durch einen Längstrichter seine Formgebung von 120 cm Breite und 10 cm Höhe. Jetzt setzte bereits die Verfestigungsreaktion ein. Von unten wurden formbeständige Löcher eingepreßt, die zur späteren Aufnahme des Pflanzensteckling in der Gärtnerei dienten. Von oben erfolgte das Einpressen von Formgebungskörpern zur Begrenzung der Torfeinzelteile, der sogenannten Torf-Plugs. Das Material lief über ein Förderband, wobei die Reaktion des Kunststoffes die Wasserausscheidung begünstigte. In einer Zentrifuge wurde der Torf-Wasser-Kunststofformkörper auf den gewünschten Wassergehalt eingestellt. Die Torf-Plugs wurden anschließend zugeschnitten und für den Transport in Großgärtnereien verpackt.

### Beispiel 3

Herstellung eines erfindungsgemäßen Formkörpers wie Beispiel 2, wobei dem Wasser/Torfgemisch 20 Gew.-% des NCO-Prepolymers aus Beispiel 1 zugegeben und homogenisiert wurde.

## Patentansprüche

1. Formkörper aus mit Polyurethan/Polyharnstoff verfestigten humushaltigen Pflanzensubstrat, erhältlich dadurch, daß man
a) humushaltiges Pflanzensubstrat in Wasser aufschlämmt,
b) ein flüssiges NCO-Prepolymer mit einem NCO-Gehalt von max. 15 Gew.-%, hergestellt durch Umsetzung von Toluylendiisocyanat mit einer Polyetherpolyolkomponente, enthaltend mindestens ein Aminopolyetherpolyol in einer Menge von 0,5 bis 100 mol-%, bezogen auf die Polyetherpolyolkomponente, zumischt und
c) das so erhaltene Gemisch in eine Form einbringt und verfestigen läßt.

2. Formkörper gemäß Anspruch 1, dadurch gekennzeichnet, daß die Polyetherpolyolkomponente eine mittlere Funktionalität von 2 bis 6 und ein durchschnittliches Molekulargewicht im Bereich von 250 bis 12000 aufweist.

3. Formkörper gemäß einem der Ansprüche 1 bis 2, dadurch gekennzeichnet, daß die Menge an Prepolymer 5 bis 20 Gew.-%, bezogen auf das humushaltige Pflanzensubstrat, beträgt.

4. Formkörper gemäß einem der Ansprüche 1 bis 3, dadurch gekennzeichnet, daß man als humushaltiges Pflanzensubstrat Torf, Blumenerde, Klärschlamm und/oder Kompost aufschlämmt.

5. Verfahren zur Herstellung von Formkörpern aus mit Polyurethan/Polyharnstoff verfestigten humushaltigen Pflanzensubstrat, dadurch gekennzeichnet, daß man
a) humushaltiges Pflanzensubstrat in Wasser aufschlämmt,
b) ein flüssiges NCO-Prepolymer mit einem NCO-Gehalt von max. 15 Gew.-%, hergestellt durch Umsetzung von Toluylendiisocyanat mit einer Polyetherpolyolkomponente, enthaltend mindestens ein Aminopolyetherpolyol in einer Menge von 0,5 bis 100 mol-%, bezogen auf die Polyetherpolyolkomponente, zumischt und
c) das so erhaltene Gemisch in eine Form einbringt und verfestigen läßt.

6. Verfahren zur Herstellung von Formkörpern gemäß Anspruch 5, dadurch gekennzeichnet, daß man neben dem humushaltigen Pflanzensubstrat ein oder mehrere Zusatzstoffe aus der Gruppe Nährsubstanzen, Wachstumsregulatoren, Puffersubstanzen, Schädlingsbekämpfungsmittel, Abwehrmittel, Mineralsalze und Spurenelemente sowie Düngemittel in das Gemisch einbringt.

7. Verwendung der Formkörper gemäß Ansprüchen 1 bis 4 als Wachstumsmedien für Setzlinge in der Pflanzenan- und -aufzucht.

## Claims

1. Moulded bodies comprising a humus-containing plant substrate consolidated with polyurethane/polyurea, obtainable by
a) slurrying a humus-containing plant substrate in water,
b) admixing a liquid NCO prepolymer having a maximum NCO content of 15 % by weight, produced by the reaction of toluene diisocyanate with a polyether polyol component containing at least one aminopolyether polyol in an amount of 0.5 to 100 mole % with respect to the polyether polyol component, and
c) introducing the mixture thus obtained into a mould and allowing it to solidify.

2. Moulded bodies according to claim 1, characterised in that the polyether polyol component has a functionality of 2 to 6 and an average molecular weight in the range from 250 to 12,000.

3. Moulded bodies according to either one of claims 1 to 2, characterised in that the amount of prepolymer is 5 to 20 % by weight with respect to the humus-containing plant substrate.

4. Moulded bodies according to any one of claims 1 to 3, characterised in that peat, potting compost, sewage sludge and/or compost is slurried as the humus-containing plant substrate.

5. A process for producing moulded bodies comprising a humus-containing plant substrate consolidated with polyurethane/polyurea, characterised in that
a) a humus-containing plant substrate is slurried in water,
b) a liquid NCO prepolymer is admixed, which has a maximum NCO content of 15 % by weight, and which is produced by the reaction of toluene diisocyanate with a polyether polyol component containing at least one aminopolyether polyol in an amount of 0.5 to 100 mole % with respect to the polyether polyol component, and
c) the mixture thus obtained is introduced into a mould and allowed to solidify.

6. A process for producing moulded bodies according to claim 5, characterised in that, in addition to the humus-containing plant substrate, one or more additives from the group comprising nutrient substances, growth regulators, buffer substances, pest control and protection media, mineral salts and trace elements, as well as fertilisers, are introduced into the mixture.

7. Use of the moulded bodies according to claims 1 to 4 as growth media for seedlings in the propagation and raising of plants.

## Revendications

1. Corps moulé en un substrat végétal humique, renforcé par un polyuréthanne/polyurée, que l'on obtient par le fait que l'on :
a) met le substrat végétal humique en suspension dans l'eau ;
b) y ajoute un prépolymère NCO liquide avec une teneur en NCO de 15% en poids au maximum, préparé par réaction du toluylènediisocyanate avec un composant polyéther-polyol, contenant au moins un aminopolyétherpolyol en une quantité allant de 0,5 à 100% en moles, sur base du composant polyéther-polyol, et
c) introduit le mélange ainsi obtenu dans un moule et on laisse durcir.

2. Corps moulé suivant la revendication 1, caractérisé en ce que le composant polyéther-polyol présente une fonctionnalité moyenne allant de 2 à 6 et un poids moléculaire moyen situé dans l'intervalle allant de 250 à 12 000.

3. Corps moulé suivant l'une quelconque des revendications 1 et 2, caractérisé en ce que la quantité du prépolymère se situe dans l'intervalle allant de 5 à 20% en poids, sur base du substrat végétal humique.

4. Corps moulé suivant l'une quelconque des revendications 1 à 3, caractérisé en ce que l'on met en suspension de la tourbe, du terreau, des boues d'épuration et/ou du compost comme substrat végétal humique.

5. Procédé de préparation de corps moulés en un substrat végétal humique, renforcé par un polyuréthanne/polyurée, caractérisé en ce que l'on :
a) met le substrat végétal humique en suspension dans l'eau ;
b) y ajoute un prépolymère NCO liquide avec une teneur en NCO de 15% en poids au maximum, préparé par réaction du toluylènediisocyanate avec un composant polyéther-polyol, contenant au moins un aminopolyétherpolyol en une quantité allant de 0,5 à 100% en moles, sur base du composant polyéther-polyol, et
c) introduit le mélange ainsi obtenu dans un moule et on laisse durcir.

6. Procédé de préparation de corps moulés suivant la revendication 5, caractérisé en ce que, en plus du substrat végétal humique, on introduit dans le mélange, un ou plusieurs additifs parmi le groupe des substances nutritives, des régulateurs de croissance, des substances tampon, des agents de protection contre les parasites, des agents de défense, des sels minéraux et des éléments trace, ainsi que des engrais.

7. Utilisation des corps moulés suivant les revendications 1 à 4, comme milieu de croissance pour les plants dans la plantation et la transplantation de plantes.
